# EUROPEAN PATENT APPLICATION

(11) **EP 2 562 962 A2**
(43) Date of publication of application: **27.02.2013**
(21) Application number: 11783778.1
(22) Date of filing: 19.05.2011
(51) Int. Cl.: H04L 12/24, H04L 29/02

(54) **METHOD AND APPARATUS FOR DETERMINING A COORDINATOR**

(30) Priority: 16.05.2011 KR 20110045685; 20.05.2010 US 346588 P; 19.05.2010 US 346075 P
(71) Applicant: Samsung Electronics Co., Ltd, Gyeonggi-do 443-742 (KR)
(72) Inventor: LEE, Jae-Min, Suwon-si Gyeonggi-do 442-703 (KR); NA, Il-Ju, Yongin-si Gyeonggi-do 446-756 (KR); SINGH, Harkirat, Santa Clara, California 95050 (US)
(74) Representative: Davies, Robert Ean
(86) International application number: PCT/KR2011/003704
(87) International publication number: WO 2011/145896

(57) **Abstract**

A method and an apparatus for electing a coordinator of a network based on information regarding coordinator capacity including information regarding at least one item for determining whether a corresponding device is suitable as a coordinator.

## Description

### CROSS-REFERENCE TO RELATED PATENT APPLICATION

This application claims the benefit of U.S. Provisional Application No. 61/346,075, filed on May 19, 2010, and U.S. Provisional Application No. 61/346,588, filed on May 20, 2010, in the U.S. Patent and Trademark Office, and Korean Patent Application No. 10-2011-0045685, filed on May 16, 2011, in the Korean Intellectual Property Office, the disclosures of which are incorporated herein in their entirety by reference.

### BACKGROUND OF THE INVENTION

### 1. Field of the Invention

The present invention relates to a method and an apparatus for determining a coordinator, and more particularly, to a method and an apparatus for electing a coordinator which conducts network management.

### 2. Description of the Related Art

Systems for network management include a centralized control scheme and a distributed control scheme. The centralized control scheme is a system in which one of devices included in a network conducts network managements, such as address allocation, bandwidth allocation, etc., as a coordinator.

### SUMMARY OF THE INVENTION

The present invention provides a method and an apparatus for electing one of a plurality of devices included in a network as a coordinator and a computer readable recording medium having recorded thereon the method.

According to an aspect of the present invention, there is provided a method by which a first device elects a coordinator for managing a network, the method including establishing a connection to a second device; receiving information regarding coordinator capacity of the second device from the second device; and electing the first device or the second device as the coordinator by comparing information regarding coordinator capacity of the first device and the information regarding coordinator capacity of the second device, wherein the information regarding coordinator capacity includes information regarding at least one item for determining whether a corresponding device is suitable as a coordinator.

The at least one item includes an item indicating whether the corresponding device is a device capable of functioning as a coordinator.
The at least one item further includes an item indicating whether the corresponding device is a switch device for relaying data transmission between devices within the network; and an item indicating whether the corresponding device is a device always ON.

The at least one item further includes an item related to a number of ports included in the corresponding device; and an item related to the maximum hop of the corresponding device with respect to another device connected to the corresponding device.

In the step of electing the first device or the second device as the coordinator, if it is determined that the second device is more suitable as the coordinator than the first device as a result of comparing the information regarding coordinator capacity of the first device and the information regarding coordinator capacity of the second device, the second device is elected as the coordinator.

The method further includes, if the first device is a coordinator of a network, to which the first device has belonged before the first device is connected to the second device, handing over coordinator role to the second device.

In the step of electing the first device or the second device as the coordinator, if it is determined that the first device is more suitable as the coordinator than the second device as a result of comparing the information regarding coordinator capacity of the first device and the information regarding coordinator capacity of the second device, the first device is elected as the coordinator.

The method further includes announcing the devices within the network that the first device is the coordinator.

According to another aspect of the present invention, there is provided a method by which a first device elects a coordinator for managing a network, the method including establishing a connection to a second device; receiving information regarding coordinator capacity from a first coordinator of a first network, to which the first device has belonged prior to the connection; receiving information regarding coordinator capacity from a second coordinator of a second network, to which the second device has belonged prior to the connection; and electing the first coordinator or the second coordinator as the coordinator of a network, which is formed as the first network and the second network are merged, by comparing information regarding coordinator capacity of the first coordinator and the information regarding coordinator capacity of the second coordinator, wherein the information regarding coordinator capacity includes information regarding at least one item for determining whether a corresponding device is suitable as a coordinator.

According to another aspect of the present invention, there is provided a coordinator electing device for electing a coordinator, which manages a network, the coordinator electing device including a connecting unit, which establishes a connection to a second device; and a coordinator management unit, which receives information regarding coordinator capacity of the second device from the second device and elects the first device or the second device as the coordinator by comparing information regarding coordinator capacity of the first device and the information regarding coordinator capacity of the second device, wherein the information regarding coordinator capacity includes information regarding at least one item for determining whether a corresponding device is suitable as a coordinator.

According to another aspect of the present invention, there is provided a coordinator electing device for electing a coordinator, which manages a network, the coordinator electing device including a connecting unit, which establishes a connection to a second device; and a coordinator management unit, which receives information regarding coordinator capacity from a first coordinator of a first network, to which the first device has belonged prior to the connection, receives information regarding coordinator capacity from a second coordinator of a second network, to which the second device has belonged prior to the connection, and elects the first coordinator or the second coordinator as the coordinator of a network, which is formed as the first network and the second network are merged, by comparing information regarding coordinator capacity of the first coordinator and the information regarding coordinator capacity of the second coordinator, wherein the information regarding coordinator capacity includes information regarding at least one item for determining whether a corresponding device is suitable as a coordinator.

According to another aspect of the present invention, there is provided a computer readable recording medium having recorded thereon a computer program for implementing the method of electing a coordinator.

### BRIEF DESCRIPTION OF THE DRAWINGS

The above and other features and advantages of the present invention will become more apparent by describing in detail exemplary embodiments thereof with reference to the attached drawings in which:
FIG. 1 is a diagram of a network topology of devices connected to one another through an audio/video (AV) interface, according to an embodiment of the present invention;
FIG. 2A is a diagram of bidirectional data transmission through an AV interface, according to an embodiment of the present invention;
FIG. 2B is a diagram of bidirectional data transmission through an AV interface, according to another embodiment of the present invention;
FIG. 3 is a block diagram of a layer structure of the network based on the AV interface, according to an embodiment of the present invention;
FIG. 4 shows a device connection according to an embodiment of the present invention;
FIG. 5 is a flowchart for describing a method of electing a coordinator according to an embodiment of the present invention;
FIGS. 6A through 6E show criteria for electing a coordinator according to an embodiment of the present invention;
FIG. 7 shows information regarding coordinator capacity according to an embodiment of the present invention;
FIG. 8 is a flowchart for describing a method of electing a coordinator according to another embodiment of the present invention;
FIG. 9 shows a device connection according to another embodiment of the present invention;
FIG. 10 is a flowchart for describing a method of electing a coordinator according to another embodiment of the present invention;
FIG. 11 is a flowchart for describing a method of electing a coordinator according to another embodiment of the present invention;
FIG. 12 shows a device connection according to another embodiment of the present invention;
FIG. 13 is a flowchart for describing a method of electing a coordinator according to another embodiment of the present invention;
FIG. 14 is a flowchart for describing a method of electing a coordinator according to an embodiment of the present invention;
FIG. 15 shows a coordinator electing device according to an embodiment of the present invention; and
FIG. 16 shows a coordinator electing device according to another embodiment of the present invention.

### DETAILED DESCRIPTION OF THE INVENTION

The present invention will now be described more fully with reference to the accompanying drawings, in which exemplary embodiments of the invention are shown.

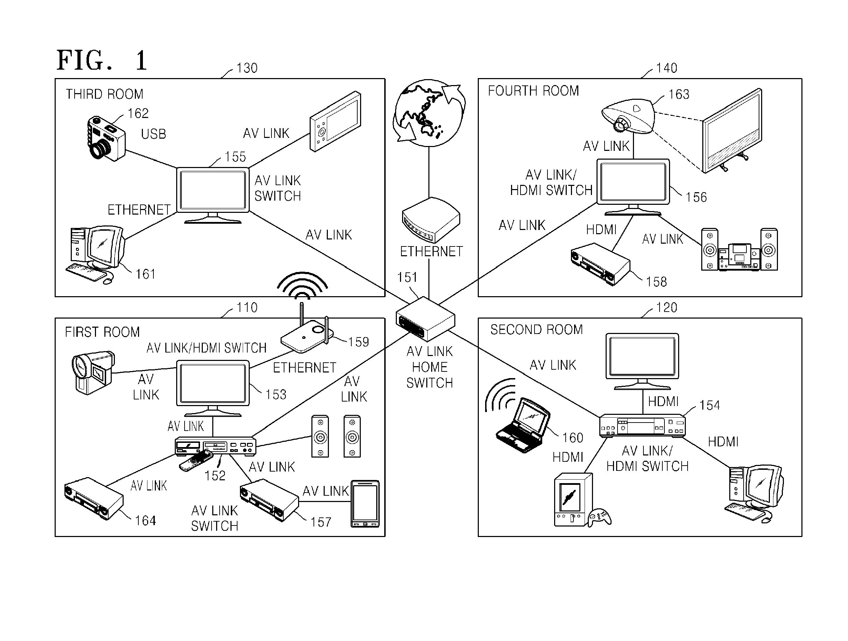

FIG. 1 is a diagram of a network topology of devices connected to one another through an audio/video (AV) interface, according to an embodiment of the present invention. The AV interface is an interface for transmitting and receiving AV data. 'AV link' is established based on the AV interface according to an embodiment of the present invention, and a high-definition multimedia interface (HDMI) is a connection via a HDMI cable.

Referring to FIG. 1, AV devices may establish networks through the AV interface according to an embodiment of the present invention. The AV devices disposed in a plurality of rooms may be connected to various types of AV devices disposed in rooms that are the same as or different from the plurality of rooms through the AV interface according to the present embodiment. In this regard, a switch device for relaying AV link relays a connection based on the AV interface. The switch device may be a separate device for relaying AV link, such as an AV link home switch 151 or AV devices, namely, an AV receiver 152, a TV 153, a switch device 154, a TV 155, a TV 156, or a Blu-ray player 157 each having a switch function. In a first room 110, an AV receiver 152, a TV 153, and a Blu-ray player 157 that are each an AV device act as a switch device, and in a third room 130 and a fourth room 140, TVs 155 and 156 that are each an AV device act as a switch device.

In addition, the switch device may be a device for switching the AV interface according to the present embodiment and the HDMI. For example, a switch device 154 in a second room 120 may receive AV data from a computer and a game station through the HDMI and may transmit the received AV data to devices disposed in the first room 110, the third room 130, and the fourth room 140 through the AV link according to the present embodiment.

The devices of a network shown in FIG. 1 may be divided into a source/leaf device, a source/switch device, a switch device, a sink/switch device, and a sink/leaf device according to their roles.

A device for providing the AV data without relaying the AV link, such as a set-top box (STB) 164 in the first room 110, corresponds to the source/leaf device, and a device for providing the AV data to another device and relaying the AV link, such as the Blu-ray player 157 in the first room 110, corresponds to the source/switch device. In addition, a device for performing only relaying of the AV links, such as the AV link home switch 151, corresponds to the switch device, and a device for receiving the AV data from another device and relaying the AV link, such as the TV 156 in the fourth room 140, corresponds to the sink/switch device. Lastly, a device for receiving the AV data from another device without relaying the AV link, such as a projector 163 in the fourth room 140, corresponds to the sink/leaf device.

According to the network structure of FIG. 1, AV data output from the Blu-ray player 157 in the first room 110 may be transmitted to the TV 155 in the third room 130 or the TV 156 in the fourth room 140 through the AV receiver 152 and the AV link home switch 151. In addition, a broadcasting signal received by a STB 158 in the fourth room 140 may be transmitted to the TV 155 in the third room 130 through the AV link home switch 151 and to the TV 153 in the first room 110 through the AV link home switch 151 and the AV receiver 152.

In other words, in order to freely transmit and receive the AV data in a network based on the AV interface (hereinafter, referred to as an 'AV network'), as illustrated in FIG. 1, the AV interface according to the present embodiment must support bidirectional data transmission.

An AV interface according to the related art, such as a digital visual interface (DVI) or a HDMI, supports unidirectional data transmission from a source device to a sink device. AV data output from the source device is transmitted only to the sink device, and the sink device may not transmit the AV data to the source device through the AV interface according to the related art, such as the DVI or HDMI. For example, the TV 156 that is a sink device in the fourth room 140 may receive the AV data from the STB 158 connected to the TV 156 via the HDMI and may not transmit the AV data to the STB 158.

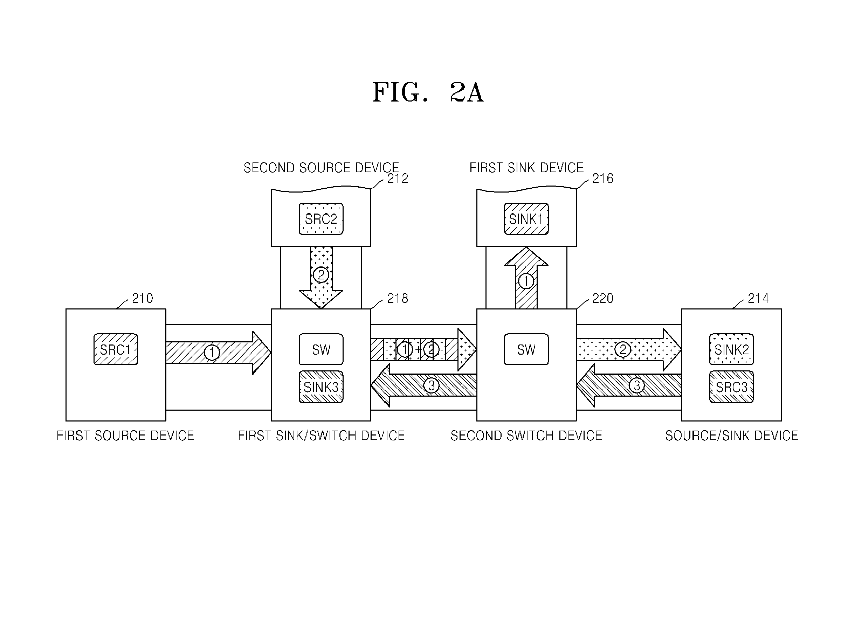

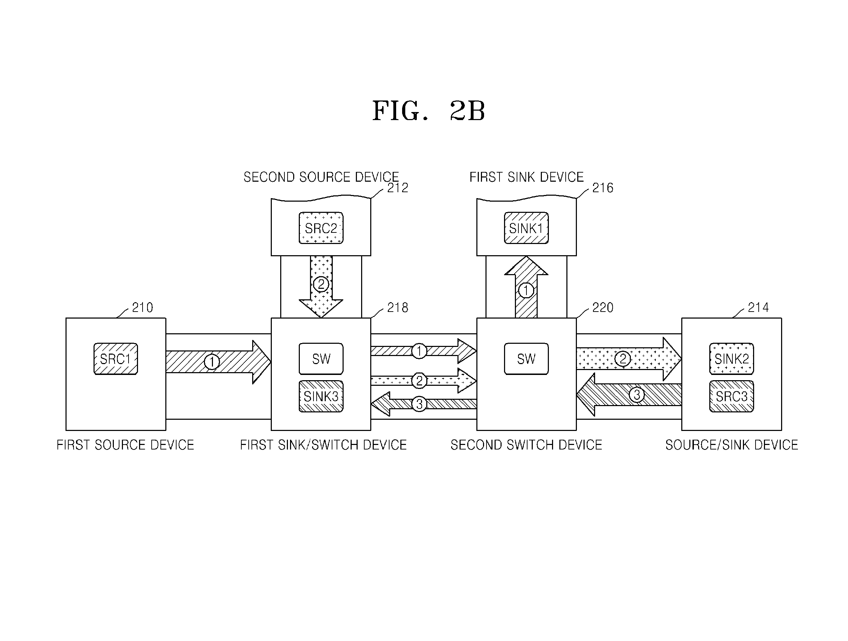

However, in the AV link through the AV interface according to the present embodiment, bidirectional data transmission may be supported, and data may be transmitted to a device in another room in the network structure of FIG. 1, and data may be received from the device in another room. In particular, in the AV link according to the present embodiment, bidirectional transmission of uncompressed video data may be performed. Thus, bidirectional data transmission will now be described below with reference to FIGS. 2A and 2B in detail.

FIG. 2A is a diagram of bidirectional data transmission through an AV interface, according to an embodiment of the present invention.

Referring to FIG. 2A, AV data, for example, uncompressed video data output from a first source device 210, for example, a Blu-ray player, may be reproduced by a first sink device 216, for example, a projector, and AV data output from a second source device 212, for example, a STB, may be reproduced by a source/sink device 214, for example, a personal computer (PC), and AV data output from the source/sink device 214 may be reproduced by a first sink/switch device 218, for example, a TV.

The first sink/switch device 218 receives the AV data output from the first source device 210 and the AV data output from the second source device 212 and then performs time division duplex on the received AV data and transmits the time division duplexed-AV data to a second switch device 220.

The second switch device 220 that receives the AV data output from the first source device 210 and the AV data output from the second source device 212 relays the received data to transmit the AV data output from the first source device 210 to the first sink device 216 and to transmit the AV data output from the second source device 212 to the source/sink device 214. In addition, the second switch device 220 receives the AV data from the source/sink device 214 and transmits the received AV data to the first sink/switch device 218.

In a link between the first sink/switch device 218 and the second switch device 220 and a link between the second switch device 220 and the source/sink device 214, AV data, i.e., uncompressed video data is transmitted not in a unidirectional manner but in a bidirectional manner. Thus, when devices illustrated in FIG. 2A are respectively connected to one another via one AV interface cable, the AV interface may perform bidirectional data transmission via one cable and may transmit AV data received from a plurality of source devices by using time division duplex.

FIG. 2B is a diagram of bidirectional data transmission through an AV interface, according to another embodiment of the present invention.

Referring to FIG. 2B, AV data, for example, uncompressed video data output from the first source device 210, for example, a Blu-ray player, may be reproduced by the first sink device 216, for example, a projector, and AV data output from the second source device 212, for example, a STB, may be produced by the source/sink device 214, for example, a PC, and AV data output from the source/sink device 214 may be reproduced by the first sink/switch device 218, for example, a TV.

FIG. 2A illustrates a method of transmitting and receiving data by using time division duplex, and FIG. 2B illustrates a method of transmitting and receiving data by using space division duplex. The AV link based on the AV interface according to the present embodiment may include a plurality of sub-links. In addition, the plurality of sub-links may correspond to a plurality of lanes indicating a physical connection between devices and spatially separated from one another. Thus, as illustrated in FIG. 2B, AV data may be transmitted and received by using space division duplex based on the plurality of sub-links.

For example, the first sink/switch device 218 of FIG. 2B may transmit AV data output from the first source device 210 and AV data output from the second source device 212 by using space division duplex using two sub-links. Similarly, AV data output from the source/sink device 214 may be received from the second switch device 220 by using another sub-link.

An AV interface according to the related art, such as a DVI or a HDMI, may not perform bidirectional transmission of AV data. Thus, a data transmission network may not be established using the AV interface, as illustrated in FIG. 1. However, since the AV interface according to the present embodiment may perform bidirectional data transmission via one cable, as illustrated in FIGS. 2A and 2B, a network in which various devices are connected to one another, may be flexibly established.

Referring back to FIG. 1, various types of data, i.e., Ethernet data, universal serial bus (USB) data or the like, as well as AV data, may be transmitted and received through the AV interface according to the present embodiment. A case where a laptop 160 disposed in the second room 120 transmits Ethernet data to a PC 161 disposed in the third room 130 via a wireless router 159 installed in the first room 110 will now be described. Ethernet data is data generally transmitted via a transmission control protocol/Internet protocol (TCP/IP)-based LAN.

Since the AV interface according to the present embodiment supports bidirectional data transmission unlike the AV interface according to the related art, Ethernet data may be transmitted and received through the AV interface. Thus, the laptop 160 transmits the Ethernet data to the PC 161 via a network established with AV link. To this end, the switch devices disposed in the network of FIG. 1 have a function for relaying the Ethernet data. The Ethernet data is transmitted to the PC 161 from the wireless router 159 by switching of a link layer.

According to another embodiment, when USB data output from a camera 162 is transmitted to the laptop 160, the switch devices transmit the USB data to the laptop 160 by using a switch function of the USB data. Since various types of data, as well as the AV data, are transmitted through the AV interface, various devices may access a network connected via the AV interface and may transmit and receive data freely. The switch devices relay the USB data by switching of a link layer.

In addition, data for controlling a device and a network may be transmitted and received through the AV interface according to the present embodiment. For example, a user may control the AV receiver 152 disposed in the same room as the first room 110 by using the TV 153 disposed in the first room 110. The user manipulates the TV 153 and transmits data for controlling the AV receiver 152 through the AV interface, thereby controlling the AV receiver 152. In addition, the user may control the TV 156 or the STB 158 disposed in another room 140 and accessing the network established using the AV interface, through the AV interface.

Since the data for controlling the network connected via the AV interface may be transmitted and received through the AV interface, data for managing a network, as well as for setting link, may be transmitted and received as data for controlling a network through the AV interface.

Since various types of data are transmitted and received through the AV interface, a transmission unit of the AV network may include information about the types of data. The information about the types of data may be included in a header in the transmission unit of the AV network.

In addition, power may also be supplied through the AV interface according to the present embodiment. Like a supply of power through a USB interface, predetermined power may be supplied to a mobile device through the AV link. By supplying power through the AV link, power required for charging or operating the mobile device is supplied.

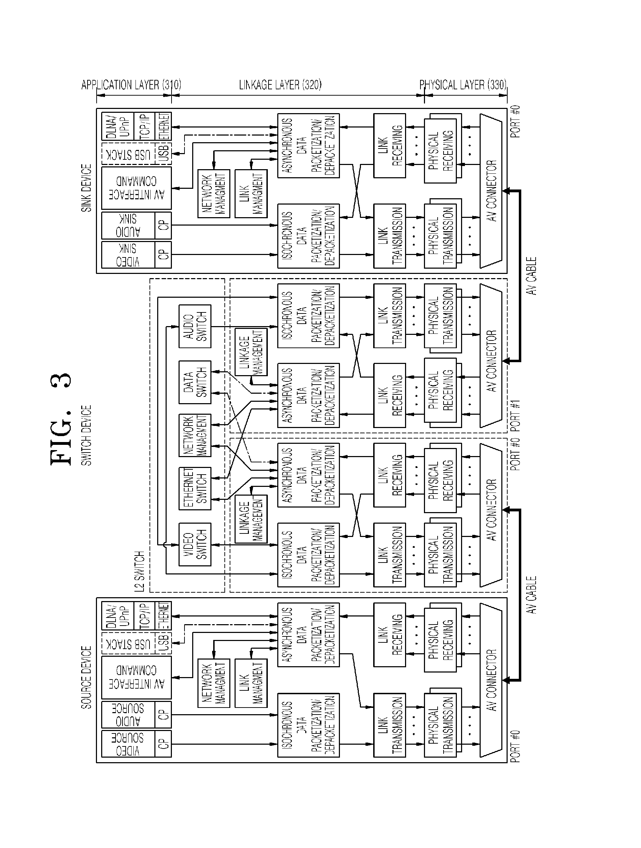

FIG. 3 is a block diagram of a layer structure of the network based on the AV interface, according to an embodiment of the present invention.

In order to transmit various types of data based on the AV interface according to the present embodiment in a bidirectional manner as described previously, a network layer structure as illustrated in FIG. 3 may be used.

Referring to FIG. 3, the network layer structure according to the present embodiment includes an application layer 310, a link layer 320, and a physical layer 310.

The application layer 310 includes sub-layers relating to processing of data transmitted and received through the above-described AV interface.

An application layer of a source device may include a video source layer for transmitting video data, an audio source layer for transmitting audio data, and a content protection (CP) layer for protecting the copyright of AV contents. In addition, the application layer of the source device may include an Ethernet layer relating to transmission of Ethernet data, a TCP/IP layer, and a Digital Living Network Alliance/Universal Plug and Play (DLNA/UPnP) layer. In addition, the application layer of the source device may include a USB stack relating to transmission of USB data and an AV interface command layer relating to control of the AV network.

Similarly, the application layer of a sink device may include a video sink layer for receiving video data, an audio sink layer for receiving audio data, and a CP layer for protecting the copyright of AV contents. In addition, the application layer of the sink device may include an Ethernet layer relating to receiving of Ethernet data, a TCP/IP layer, and a DLNA/UPnP layer. In addition, the application layer of the sink device may include a USB stack relating to transmission of USB data and an AV interface command layer relating to transmission of control data.

The link layer 320 provides a function of transmitting data of the application layer 310 to a destination device. The link layer 320 includes an isochronous data packetization/depacketization layer for packetizing or depacketizing data that needs to be transmitted in real-time, such as audio data or video data. In addition, the link layer 320 includes an asynchronous data packetization/depacketization layer for packetizing or depacketizing data that does not need to be transmitted in real-time, such as Ethernet data, USB data, or network control data. In addition, the link layer 320 includes a link management layer for managing AV link and a network management layer for managing a network based on the AV link.

The switch device includes a video switch layer, an audio switch layer, an Ethernet switch layer, and a data switch layer so as to perform switching of the above-described link layer 320. The video switch layer and the audio switch layer determine a source address and a destination address of the link layer 320 based on the result of depacketization of the isochronous data packetization/depacketization layer. Similarly, the Ethernet switch layer and the data switch layer determine a source address and a destination address of the link layer 320 based on the result of depacketization of the asynchronous data packetization/depacketization layer.

The physical layer 330 converts data of the link layer 320 into a physical signal so as to transmit the data of the link layer 320 via a cable. The source device, the switch device, and the sink device include the physical layer 330. The physical layer 330 includes an AV connector, a physical transmission layer for transmitting data, and a physical receiving layer for receiving data.

The isochronous data packetization/depacketization layer or the asynchronous data packetization/depacketization layer of the link layer 320 may transmit packetized data to a link transmission layer, and the link transmission layer may multiplex the packetized data and may transmit the multiplexed data to the physical layer 310. As described above, the AV link according to the present embodiment may include a plurality of sub-links for space division duplex, and the AV cable may include a plurality of lanes corresponding to the plurality of sub-links and spatially separated from one another. Thus, the link transmission layer may multiplex the packetized data, may allocate the pieces of data to each of the lanes and then may transmit the multiplexed data to a plurality of physical transmission layers each corresponding to the plurality of lanes.

Contrary to this, the pieces of data received by the plurality of physical receiving layers each corresponding to the plurality of lanes may be transmitted to a link receiving layer, and the link receiving layer may demultiplex the pieces of data received from the plurality of physical receiving layers and may transmit the demultiplexed data to the isochronous data packetization/depacketization layer or the asynchronous data packetization/depacketization layer. The isochronous data packetization/depacketization layer or the asynchronous data packetization/depacketization layer depacketizes the received data to transmit the depacketized data to the application layer 310 or the switch layers such as the video switch layer, the audio switch layer, the Ethernet switch layer, and the data switch layer.

Data transmitting and receiving according to the network layer structure illustrated in FIG. 3 is performed based on an address allocated to each device in the AV network. In order to identify devices connected to one another through the AV interface, a predetermined address is allocated to each device, and data transmitting and receiving is performed based on the address allocated to each device.

For example, when the AV receiver 152 disposed in the first room 110 of FIG. 1 transmits the AV data to the TV 156 disposed in the fourth room 140, the AV receiver 152 disposed in the first room 110 sets an address allocated to the AV receiver 152 in the AV network as a source address and sets an address allocated to the TV 156 as a destination address to generate a transmission unit. The generated transmission unit is a transmission unit of the AV network and is generated according to a protocol for defining an AV interface.

Address allocation in an AV network may be performed by a particular device (referred to hereinafter as a 'coordinator') which conducts network management according to the centralized control scheme. As devices join or leave an AV network, the coordinator updates AV network addresses and informs the updated AV network addresses to all devices within the AV network. Updated AV network addresses may be included in a message periodically transmitted for network management. Identifiers of each of devices included in the AV network and allocated AV network addresses may be respectively matched, and a message including information regarding the matching relationship between the identifiers and the AV network addresses may be periodically transmitted to devices within the AV network.

An AV network address is an example of network information managed by a coordinator, and all information required for maintaining an AV network and data transmission between devices within the AV network may be network information periodically transmitted by the coordinator.

When two or more devices are connected to each others and form a network, it is necessary for one of the devices to function as the coordinator. Furthermore, when a plurality of networks, each of which includes a coordinator, are merged into a single network, it is necessary to elect only one of the coordinators prior to the mergence as a coordinator. Therefore, a method for electing one of a plurality of devices included in a network as a coordinator is necessary. A method of electing a coordinator will be described below in closer detail with reference to the attached drawings.

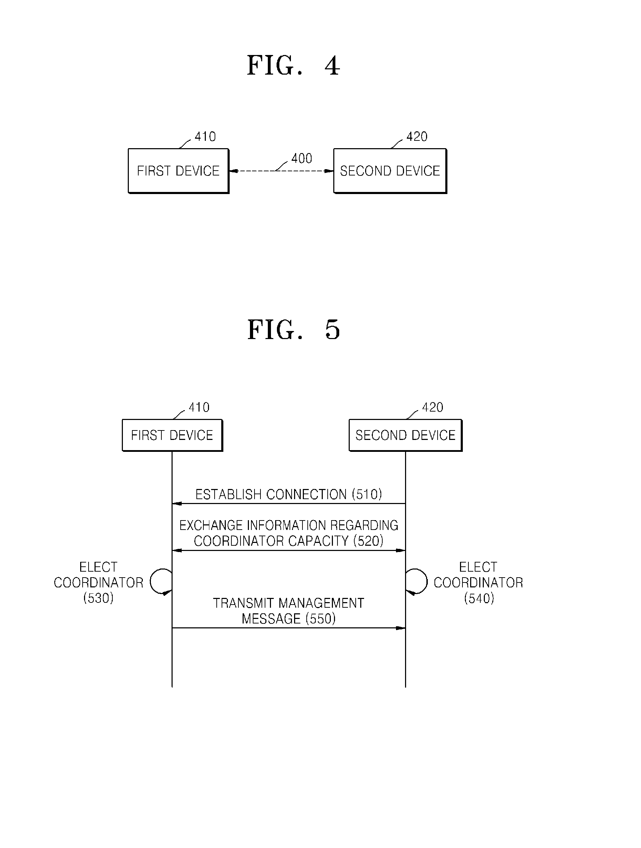

FIG. 4 shows a device connection according to an embodiment of the present invention.

Referring to FIG. 4, a first device 410 and a second device 420 establishes a new connection 400 therebetween and forms a network. The new connection 400 may be a connection based on an AV interface according to the present invention.

Here, as described above, one of the two devices 410 and 420 is elected as a coordinator of the newly formed network. It is determined which of the first device 410 and the second device 420 is more suitable as a coordinator, and the first device 410 or the second device 420 is elected as a coordinator based on a result of the determination. For example, if the first device 410 has a function as a coordinator and the second device 420 has no such function, it is necessary to elect the first device 410 as a coordinator.

Therefore, prior to election of a coordinator, information including at least an item for determining whether the first device 410 and the second device 420 are suitable as a coordinator (referred to hereinafter as 'information regarding coordinator capacity') is exchanged, and a coordinator is elected based on the exchanged information regarding coordinator capacity. Detailed description thereof will be given below with reference to FIG. 5.

FIG. 5 is a flowchart for describing a method of electing a coordinator according to an embodiment of the present invention.

Referring to FIG. 5, in an operation 510, the first device 410 and the second device 420 establish a connection therebetween. As a step in which the first device 410 and the second device 420 establish a physical connection therebetween, a link between the first device 410 and the second device 420 may be set up. The link may be an AV link based on an AV interface according to the present invention. If an AV link includes the plurality of sub-links and each of the plurality of sub-links corresponds to a plurality of physically separated lanes, at least one of the plurality of lanes may be dedicated for data transmission between the first device 410 and the second device 420.

Furthermore, if network information is periodically transmitted and received between network devices for maintaining a network, an information transmitting cycle may be initialized for synchronization of transmission and reception cycle.

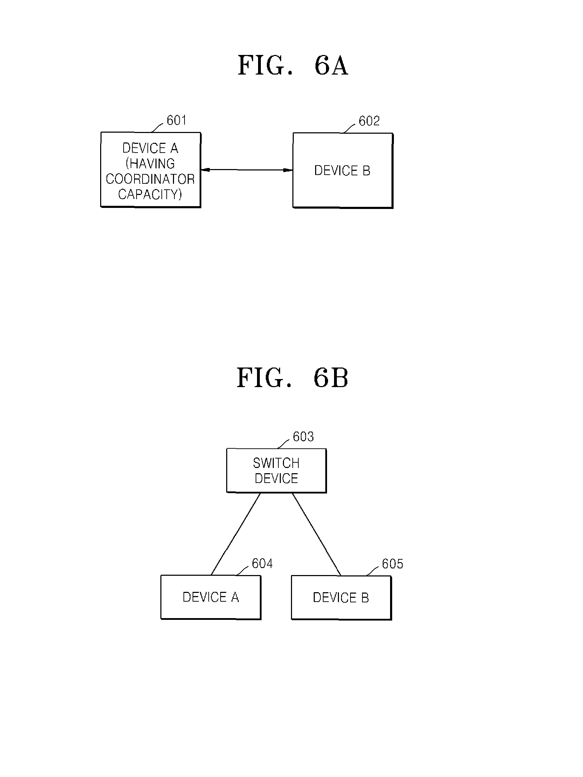

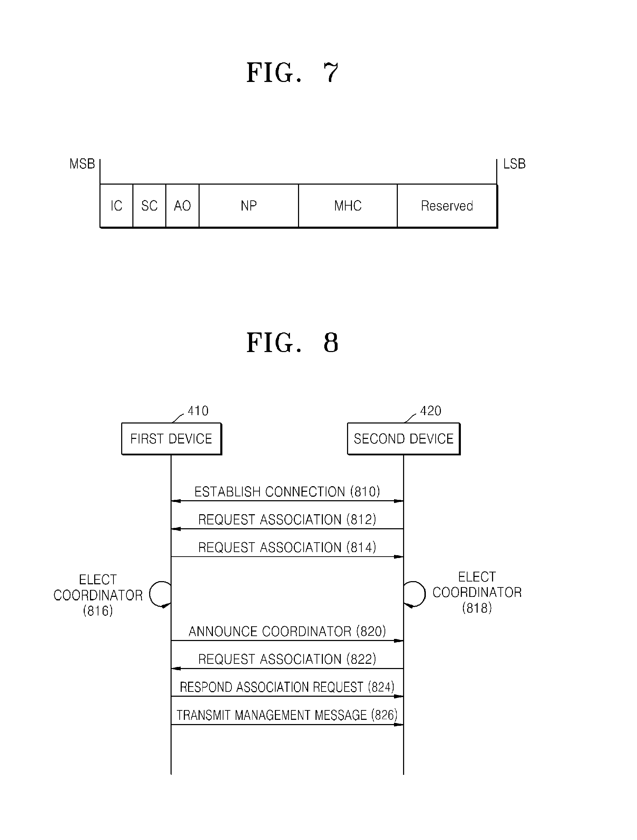

In an operation 520, the first device 410 and the second device 420 exchange the information regarding coordinator capacity. As described above, the information regarding coordinator capacity includes information regarding at least one item for determining whether the first device 410 and the second device 420 are suitable as a coordinator or not. The first device 410 receives information regarding coordinator capacity of the second device 420 from the second device 420, whereas the second device 420 receives information regarding coordinator capacity of the first device 410 from the first device 410. The information regarding coordinator capacity will be described below in closer detail with reference to FIGS. 6A through 6E and FIG. 7.

FIGS. 6A through 6E show criteria for electing a coordinator according to an embodiment of the present invention.

Referring to FIG. 6A, when a device A 601 and a device B form a network, the device A 601, which has a coordinator function, may be elected as a coordinator, based on information regarding coordinator capacity.

Referring to FIG. 6B, a switch device 603, which relays data transmission between a device A 604 and a device B 605, may be elected as a coordinator. As shown in FIG. 1, a switch device for relaying data transmission between devices is likely to be directly connected to more devices as compared to other devices. Therefore, the switch device 603 having a switch function, which is a function for relaying data transmission between a plurality of devices, may be elected as a coordinator.

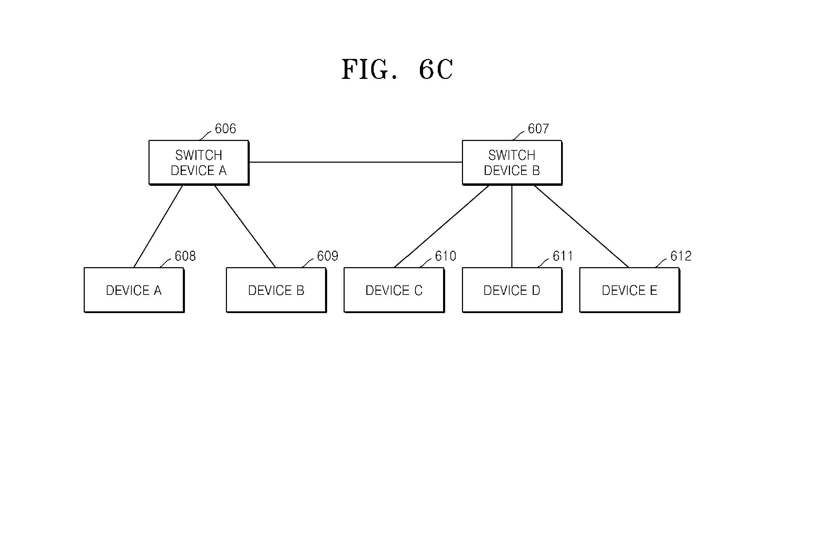

FIG. 6C shows a case in which a criterion for electing a coordinator is a number of devices directly connected to a particular device. In other words, in FIG. 6C, two devices 608 and 609 are connected to a switch device A 606, whereas three devices 610 through 612 are connected to a switch device B 607. Therefore, the switch device B 607 may be elected as a coordinator.

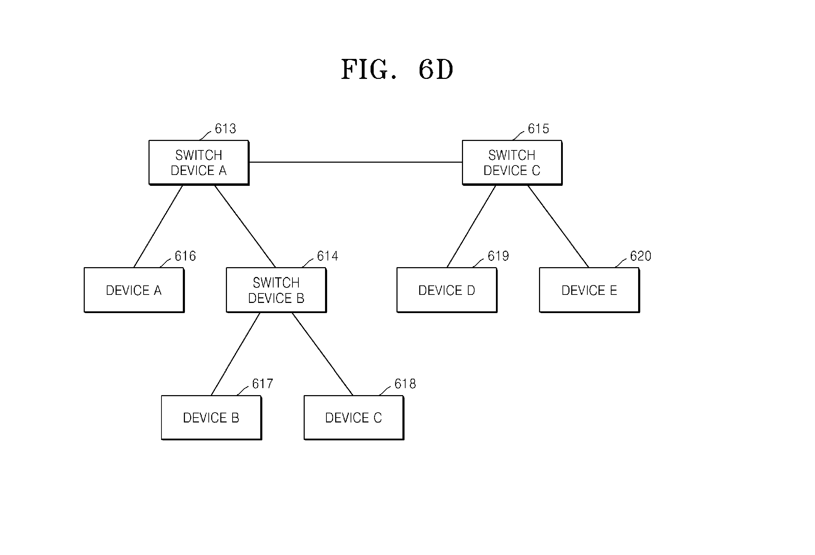

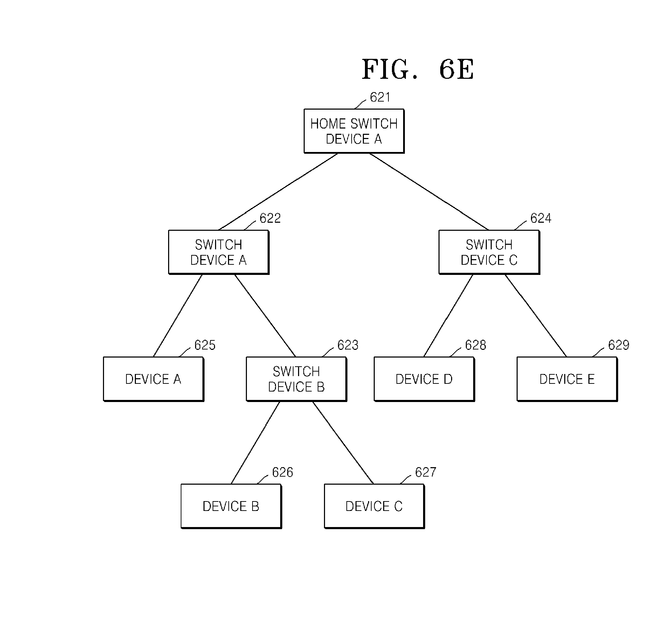

However, since devices continuously join and leave a network, numbers of devices connected to the switch device A 606 and the switch device B 607 vary. For example, in the embodiment shown in FIG. 6, when a device C 610 and a device D 611 are turned off and leave the network, only one device 612 is connected to the switch device B 706.

Therefore, a coordinator may be elected based on a total number of connectable devices, rather than a number of directly connected devices. A total number of connectable devices is identical to a number of ports arranged at a switch device, and thus a coordinator may be elected based on a total number of ports. If a number of ports of the switch device B 607 is larger than that of the switch device A 606, the switch device B 607 may be elected as a coordinator.

FIG. 6D shows a method of electing a coordinator based on the maximum hop. Referring to FIG. 6D, if both the switch device A 613 and the switch device B 614 have two ports, a coordinator may be elected based on the maximum hop. If a direct connection between devices is defined as 1 hop, the maximum hop of the switch device A 613 is 2 hops, because hops from the switch device A 613 to a device B 617, a device C 618, a device D 619, and a device E 620 are all 2 hops. However, the maximum hops of the switch device B 614 and a switch device C 615 are all 3 hops, because hops from the switch device B 614 to the device D 619 and the device E 620 are all 3 hops, and hops from the switch device C 615 to the device B 617 and the device C 618 are all 3 hops.

The smaller the maximum hop is, the lesser number of switch devices has to be passed through for accessing a device having the largest hop. Therefore, the switch device A 613 having the smallest maximum hop may be elected as a coordinator. The smaller the maximum hop is, the faster the net work information periodically transmitted for maintaining a network may be delivered to all devices within the network. Therefore, a coordinator may be elected based on the maximum hop.

FIG. 6E shows a case where a coordinator is elected based on whether a device is always ON or not. A home switch device 621 connects a home network established based on an AV interface, such as an AV link home switch 151 of FIG. 1, to an external network (e.g., internet) and relays data transmission between a plurality of rooms. Therefore, the home switch device 621 is likely to be always ON, and, if a device likely to be always ON is elected as a coordinator, frequent change of a coordinator may be avoided. In other words, whether a device is always ON or not may be a criterion for electing a coordinator.

Referring back to FIG. 5, information regarding coordinator capacity exchanged between the first device 410 and the second device 420 in the operation 520 of FIG. 5 may include at least one of a plurality of items corresponding to the plurality of criteria described above with reference to FIGS. 6A through 6E.

FIG. 7 shows information regarding coordinator capacity according to an embodiment of the present invention.

Referring to FIG. 7, the information regarding coordinator capacity exchanged between the first device 410 and the second device 420 in the operation 520 may include at least one of an item IC, an item SC, an item AO, an item NP, and an item MHC.

The item IC is an item indicating whether a device has a function as a coordinator or not. The item IC may be indicated in a single bit. If the item IC is set to a value "1," it means that a corresponding device has a function as a coordinator. If the item IC is set to a value "0," it means that a corresponding device does not have a function as a coordinator.

The item SC is an item indicating whether a device is a switch device for relaying data transmission or not. The item SC may be indicated in a single bit. If the item SC is set to a value "1," it means that a corresponding device is a switch device. If the item IC is set to a value "0," it means that a corresponding device is not a switch device.

The item AO is an item indicating whether a device is a device always ON or not. The item AO may also be indicated in a single bit. If the item AO is set to a value "1," it means that a corresponding device is a device always ON. If the item AO is set to a value "0," it means that a corresponding device is not always ON.

The item NP is an item indicating a number of ports of a device. The item NP may be indicated in a plurality of bits, and a value of the item NP may include a number of ports included in a corresponding device.

The item MHC is an item related to the maximum hop of a device. The item MHC may also be indicated in a plurality of bits, and a value of the item MHC includes information regarding the maximum hop from among hops from a corresponding device to other devices.

Referring back to FIG. 5, in an operation 530, the first device 410 elects the first device 410 or the second device 420 as a coordinator based on the information regarding coordinator capacity of the second device 420 received in the operation 520. The first device 410 compares the information regarding coordinator capacity of the second device 420 to the information regarding coordinator capacity of the first device 410 and elects the first device 410 or the second device 420 more suitable to function as a coordinator as a coordinator.

In the operation 530, when the information regarding coordinator capacity is compared, a plurality of items may be compared in a predetermined order. For example, if the first device 410 or the second device 420 is elected as a coordinator by comparing the items IC of the information regarding coordinator capacity of the first device 410 and the second device 420 shown in FIG. 7 first, other items may not be compared. Only if the items IC of the information regarding coordinator capacity of the first device 410 and the second device 420 are identical to each other, a coordinator may be elected by comparing the items SC and the items AO of the information regarding coordinator capacity of the first device 410 and the second device 420 in the order stated. Furthermore, only if the items IC, the items SC, and the items AO of the information regarding coordinator capacity of the first device 410 and the second device 420 are identical to each other, a coordinator may be elected by comparing the items NP and the items MHC of the information regarding coordinator capacity of the first device 410 and the second device 420 in the order stated.

If it is determined that the first device 410 is more suitable as a coordinator as a result of comparing the information regarding coordinator capacity of the first device 410 and the information regarding coordinator capacity of the second device 420, the first device 410 elects itself as a coordinator. On the contrary, if it is determined that the second device 420 is more suitable as a coordinator, the first device 410 elects the second device 420 as a coordinator.

In an operation 540, the second device 420 elects the first device 410 or the second device 420 as a coordinator based on the information regarding coordinator capacity of the first device 410 received from the first device 410 in the operation 520. Same as in the operation 530, a more suitable device is elected as a coordinator. Since a coordinator is elected in the same regard as in the operation 530, a result of election in the operation 530 and a result of election in the operation 540 are the same.

If the first device 410 is elected as a coordinator as results of elections in the operations 530 and 540, the first device 410 transmits a management message in an operation 550. The first device 410 may transmit a management message including information regarding an address allocated to the second device 420 to the second device 420. The operation 550 of FIG. 5 shows a case where the first device 410 is elected as a coordinator. If the second device 420 is elected as a coordinator in the operations 530 and 540, the second device 420 transmits a management message.

A management message may include network information for management of a network, and the first device 410 may periodically transmits management messages.

Network information included in a management message may include at least one of information regarding an identifier of a network that is newly formed as the plurality of devices 410 and 420 are connected to each other, information regarding relationships between identifiers of the plurality of devices and addresses allocated to the plurality of devices, information regarding types of the plurality of devices, information regarding an identifier of a coordinator, and information indicating that the first device 410 is a coordinator.

The information regarding an identifier of a network includes information for distinguishing the network, which is formed as the first device 410 and the second device 420 are connected to each other as shown in FIG. 4, from other networks.

The identifiers of the plurality of devices are information for identifying each of the plurality of devices and may be universally unique identifiers (UUID), globally unique identifiers (GUID), or serial numbers. Furthermore, in a case where the first device 410 and the second device 420 forms an AV network according to the present invention, static addresses unique to the first device 410 and the second device 420 may be used as identifiers of the first device 410 and the second device 420, aside from AV network addresses dynamically allocated to the first device 410 and the second device 420. Addresses unique to the first device 410 and the second device 420, such as MAC addresses, that are given to the first device 410 and the second device 420 when the first device 410 and the second device 420 are manufactured may be used as identifiers with respect to the first device 410 and the second device 420.

The information regarding types of the plurality of devices is information indicating that each of the plurality of devices in the network is a source/leaf device, a source/switch device, a switch device, a sink/switch device, or a sink/leaf device. Addresses allocated to the plurality of devices and the information regarding types of the plurality of devices are respectively matched and included in a management message.

The information regarding an identifier of a coordinator is information for identifying a device elected as a coordinator. An address unique to a device elected as a coordinator may be used as an identifier of the coordinator.

Furthermore, management messages transmitted by the first device 410 may be messages for periodically announcing existence of the first device 410 (referred to hereinafter as 'periodical messages'). The devices 410 and 420 included in a network may maintain the network by transmitting periodical messages including information regarding addresses allocated to the devices 410 and 420, identifiers of the devices 410 and 420, and types of the devices 410 and 420 to other devices within the network. Therefore, a management message transmitted by the first device 410 may be one of such periodical messages transmitted by devices in a network. A periodical message may include information indicating that the first device 410 is a coordinator.

FIG. 8 is a flowchart for describing a method of electing a coordinator according to another embodiment of the present invention.

Same as FIG. 5, FIG. 8 shows a method of electing a coordinator in a case where the first device 410 and the second device 420 are connected to each other and form a network, as shown in FIG. 4.

Referring to FIG. 8, the first device 410 establishes a connection to the second device 420 in an operation 810. The operation 810 corresponds to the operation 510 of FIG. 5.

In operations 812 and 814, the first device 410 and the second device 420 request associations to each other via a link set up in the operation 810. Even after a physical connection is established, it is necessary to complete an association for receiving allocation of addresses and transmitting and receiving data in a network. However, since it is unknown which of the first device 410 and the second device 420 allocates addresses as a coordinator, the first device 410 and the second device 420 request associations to each other in the operations 812 and 814.

Messages transmitted to request association in the operations 812 and 814 include information regarding coordinator capacity. An association requesting message transmitted by the second device 420 in the operation 812 includes information regarding coordinator capacity of the second device 420, whereas an association requesting message transmitted by the first device 410 in the operation 814 includes information regarding coordinator capacity of the first device 410.

The association requesting message transmitted by the second device 420 in the operation 812 may include not only the information regarding coordinator capacity of the second device 420, but also information regarding an identifier of the second device 420 and information regarding a type of the second device 420. As described above, the information regarding the identifier of the second device 420 may be information regarding an address unique to the second device 420. Furthermore, the association requesting message transmitted by the second device 420 in the operation 812 may include information regarding an address temporarily allocated to the second device 420 prior to completion of association. In other words, information regarding an address temporarily allocated to the second device 420 by the second device 420 prior to completion of association may be included in the association requesting message to be transmitted to the first device 410.

The association requesting message transmitted by the first device 410 in the operation 814 may include not only the information regarding coordinator capacity of the first device 410, but also information regarding an identifier of the first device 410 and information regarding a type of the first device 410. Furthermore, the association requesting message transmitted by the first device 410 in the operation 812 may include information regarding an address temporarily allocated to the first device 410 by the first device 410 prior to completion of association.

In operations 816 and 818, each of the first device 410 and the second device 420 elects a coordinator. The operations 816 and 818 correspond to the operations 530 and 540, respectively.

In the operation 816, the first device 410 elects a coordinator based on the information regarding coordinator capacity of the second device 420, the information included in the association requesting message received in the operation 812. A coordinator is elected by comparing the information regarding coordinator capacity of the second device 420 included in the association requesting message received in the operation 812 to the information regarding coordinator capacity of the first device 410.

In the operation 818, the second device 420 elects a coordinator based on the information regarding coordinator capacity of the first device 410, the information included in the association requesting message received in the operation 814. A coordinator is elected by comparing the information regarding coordinator capacity of the first device 410 included in the association requesting message received in the operation 814 to the information regarding coordinator capacity of the second device 420.

In an operation 820, the first device 410 announces to the second device 420 that the first device 410 is a coordinator. When the first device 410 is elected as a coordinator as results of determinations in the operations 816 and 818, the first device 410 generates an announcement message for announcing that the first device 410 is elected as a coordinator and transmits the message to the second device 420. The announcement message transmitted in the operation 820 may include information regarding at least one of an identifier of a network, an address unique to a coordinator, and an identifier of the coordinator.

The operation 820 shows a case where the first device 410 is elected as a coordinator in the operations 816 and 818. If the second device 420 is elected as a coordinator, the second device 420 transmits a message for announcing that the second device 420 is elected as a coordinator to the first device 410.

In an operation 822, the second device 420 requests an association to the first device 410. An association requesting message transmitted by the second device 420 in the operation 822 is identical to that of the operation 812, except that the association requesting message is transmitted in the operation 822 after a coordinator is elected in the operations 816 and 818. As described above in the operation 812, the association requesting message transmitted by the second device 420 in the operation 822 may include not only the information regarding coordinator capacity of the second device 420, but also information regarding an identifier of the second device 420, information regarding a type of the second device 420, and information regarding an address temporarily allocated to the second device 420 prior to completion of association.

In an operation 824, the first device 410 transmits a response message with respect to the association requesting message of the operation 822. The response message may include at least one of information regarding an identifier of a network and information regarding an address allocated to the second device 420.

In an operation 826, the first device 410 transmits a management message including network information for management of a network. The management messages transmitted by the first device 410 may be periodical messages as described above. The operation 826 corresponds to the operation 550 of FIG. 5.

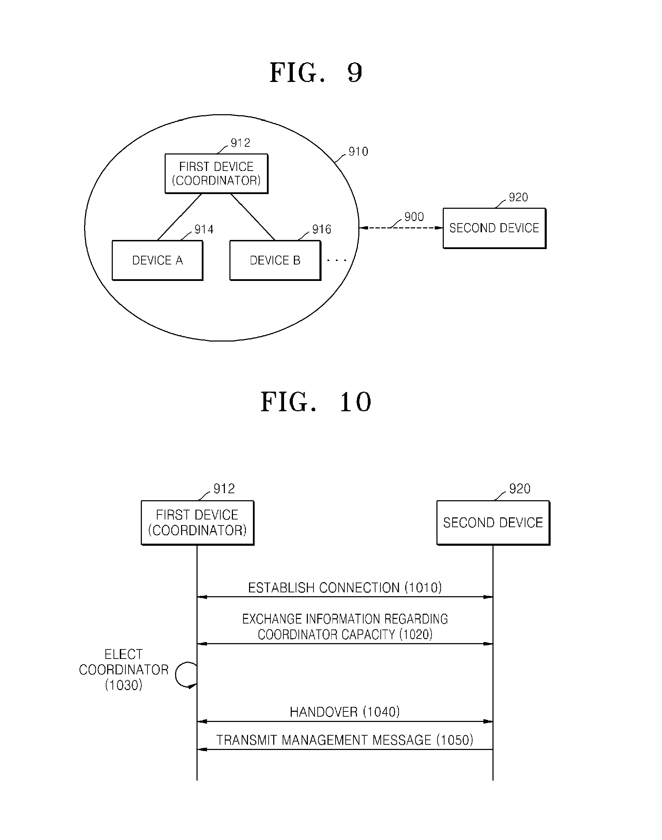

FIG. 9 shows a device connection according to another embodiment of the present invention.

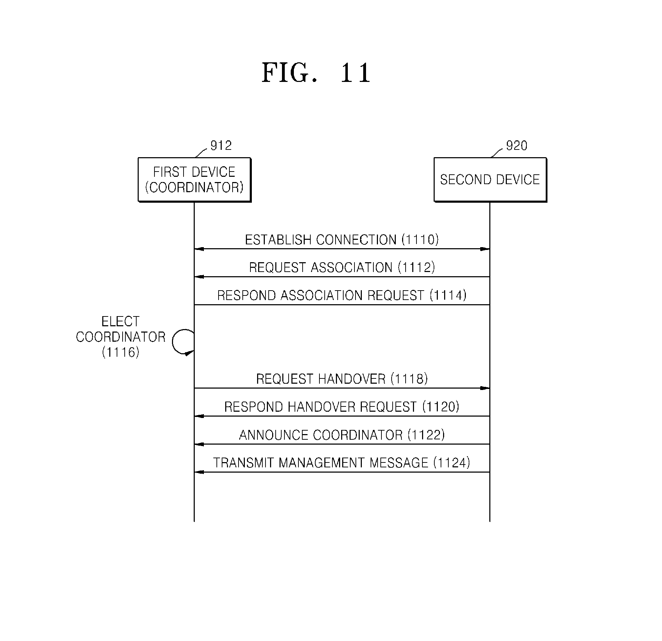

FIG. 9 shows a case in which a second device 920 newly joins a network 910 that is formed as a first device 912 and a plurality of devices 914 and 916 are connected to each other. A new connection 900 may be a connection based on an AV interface according to the present invention. Before the new connection 900 is established between the first device 920 and the network 910, the first device 912 functions as a coordinator. However, the second device 920 is more suitable as a coordinator than the first device 912, the second device 920 may function as a coordinator after the second device 920 joins the network. Accordingly, the first device 912 and the second device 920 exchange information regarding coordinator capacity and determine a coordinator based on the information regarding coordinator capacity. Detailed description thereof will be given below with reference to FIGS. 10 and 11.

FIG. 10 is a flowchart for describing a method of electing a coordinator according to another embodiment of the present invention.

Referring to FIG. 10, in an operation 1010, the first device 912 and the second device 920 establish a connection therebetween. As a step in which the first device 912 and the second device 920 establish a physical connection therebetween, a link between the first device 912 and the second device 920 may be set up. The operation 1010 is performed in a case where the first device 912 is directly connected to the second device 920. The second device 920 may not be directly connected to the first device 912, and may be connected to another device 914 or 916 in the network 910. In a case where the second device 920 is connected to another device 914 or 916, a connection is established by performing the operation 1010 with respect to the corresponding device 914 or 916.

In an operation 1020, the first device 912 and the second device 920 exchange the information regarding coordinator capacity. As described above, the information regarding coordinator capacity includes information regarding at least one item for determining whether the first device 912 and the second device 920 are suitable as a coordinator or not. The first device 912 receives information regarding coordinator capacity of the second device 920 from the second device 920, whereas the second device 920 receives information regarding coordinator capacity of the first device 912 from the first device 912. The information regarding coordinator capacity is described above with reference to FIGS. 6A through 6E and FIG. 7.

In an operation 1030, the first device 912 elects the first device 912 or the second device 920 as a coordinator based on the information regarding coordinator capacity of the second device 920 received in the operation 1020. The first device 912 compares the information regarding coordinator capacity of the second device 920 to the information regarding coordinator capacity of the first device 912 and elects the first device 912 or the second device 920 more suitable to function as a coordinator as a coordinator. The operation 1030 corresponds to the operation 530 of FIG. 5 and the operation 816 of FIG. 8.

As a result of the determination in the operation 1030, if the first device 912 is more suitable as a coordinator than the second device 920 after the second device 920 newly joins the network and the first device 912 is elected as a coordinator, the first device 912 continues functioning as a coordinator and transmits a management message including information regarding an address allocated to the second device 920 to the second device 920.

However, as a result of the determination in the operation 1030, if the second device 920 is more suitable as a coordinator than the first device 912 and the second device 920 is elected as a coordinator, operations 1040 and 1050 are performed.

In the operation 1040, the first device 912 hands over coordinator role to the second device 920. The first device 912 transmits a request message for requesting the second device 920 to function as a coordinator to the second device 920, and the second device 920 transmits a response message with respect to the request. When the coordinator function is handed over, the second device 920, as a coordinator, transmits a management message including network information to the first device 912 in the operation 1050. The management message transmitted in the operation 1050 is a periodical message as described above, and may include information indicating that the second device 920 is a new coordinator.

FIG. 11 is a flowchart for describing a method of electing a coordinator according to another embodiment of the present invention.

Referring to FIG. 11, in an operation 1110, the first device 912 and the second device 920 establish a connection therebetween. The operation 1110 corresponds to the operation 1010 of FIG. 10. In a case where the second device 920 is not directly connected to the first device 912 and is connected to another device 914 or 916 in the network 910, a connection is established by performing the operation 1110 with respect to the corresponding device 914 or 916.

In an operation 1112, the second device 920 requests association to the first device 912 via a link set up in the operation 1110. Since the first device 912 allocates addresses as a coordinator of the network 910, association is requested to the first device 912. A message transmitted by the second device 920 for requesting association includes information regarding coordinator capacity of the second device 920.

If the second device 920 is not directly connected to the first device 912 and is connected to another device 914 or 916 in the network 910, information regarding the first device 912, which is a coordinator of the network 910, (e.g., information regarding an address or an identifier of the first device 912 in the network 910) is received from the connected device 914 or 916 and association is requested to the first device 912 based on the received information.

In an operation 1114, the first device 912 transmits a response message with respect to the association requesting message of the operation 1112. The response message may include information regarding an identifier of the network 910 and information regarding an address allocated to the second device 920 in the network 910.

In an operation 1116, the first device 912 elects the first device 912 or the second device 920 as a coordinator based on the information regarding coordinator capacity of the second device 920 received in the operation 1112. The first device 912 compares the information regarding coordinator capacity of the second device 920 to the information regarding coordinator capacity of the first device 912 and elects the first device 912 or the second device 920 more suitable to function as a coordinator as a coordinator. The operation 1116 corresponds to the operation 1030 of FIG. 10.

As a result of the determination in the operation 1116, if the first device 912 is more suitable as a coordinator than the second device 920 after the second device 920 newly joins the network, the first device 912 continues functioning as a coordinator. However, if it is determined as a result of the determination in the operation 1116 that the second device 920 is more suitable as a coordinator than the first device 912 and the second device 920 is elected as a coordinator, operations 1118 through 1124 are performed.

In the operations 1118 through 1122, the first device 912 hands over coordinator role to the second device 920. In the operation 1118, the first device 912 transmits a request message for requesting the second device 920 to function as a coordinator, that is, a handover requesting message to the second device 920, and the second device 920 transmits a response message with respect to the request, that is, a handover response message.

When the coordinator function is handed over, the second device 920 announces to devices within the network 910 that the second device 920 is a coordinator of the network 910 in the operation 1122 and transmits a management message including network information to the devices within the network 910 in the operation 1124. The management message transmitted in the operation 1124 is a periodical message as described above, and may include information indicating that the second device 920 is a coordinator.

Since the second device 920 is a newly joined device, the second device 920 does not have information regarding a plurality of devices within a network (e.g., addresses allocated to the plurality of devices and a routing table), the second device 920 may share and acquire such information with the first device 912 or another device 914 or 916 and may transmit a management message based on the acquired information.

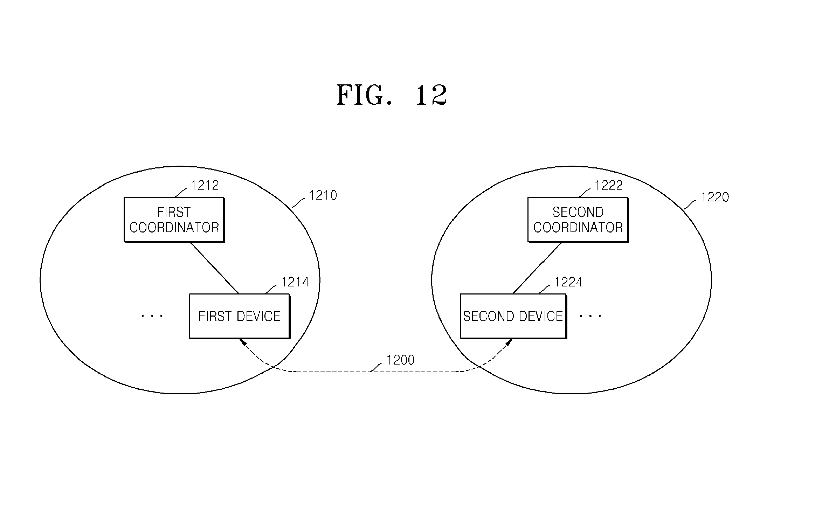

FIG. 12 shows a device connection according to another embodiment of the present invention.

FIG. 12 shows a case where a first network 1210, in which a first coordinator 1212 is the coordinator, and a second network 1220, in which a second coordinator 1222 is the coordinator, are merged. In other words, FIG. 12 shows a case where the first network 1210 and the second network 1220 are merged as a new connection 1200 is established between a first device 1214 of the first network 1210 and a second device 1224 of the second network 1220. The new connection 1200 may be a connection based on an AV interface according to the present invention.

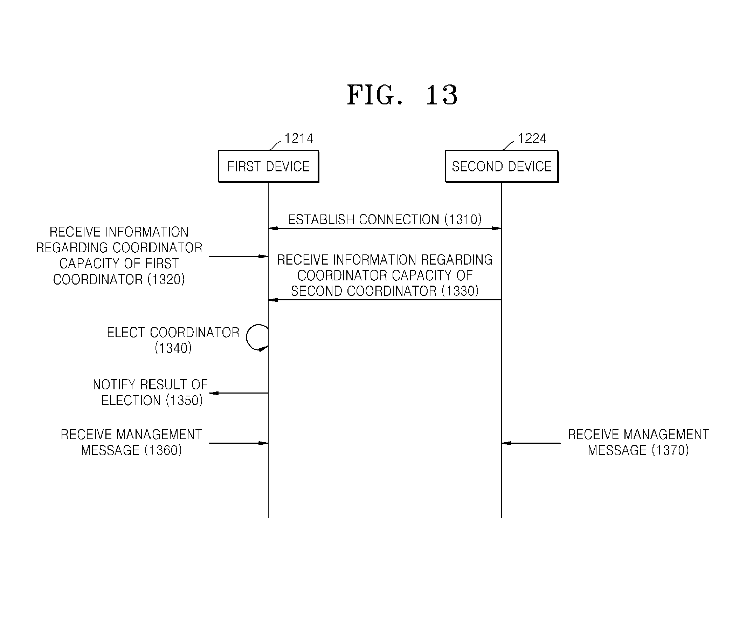

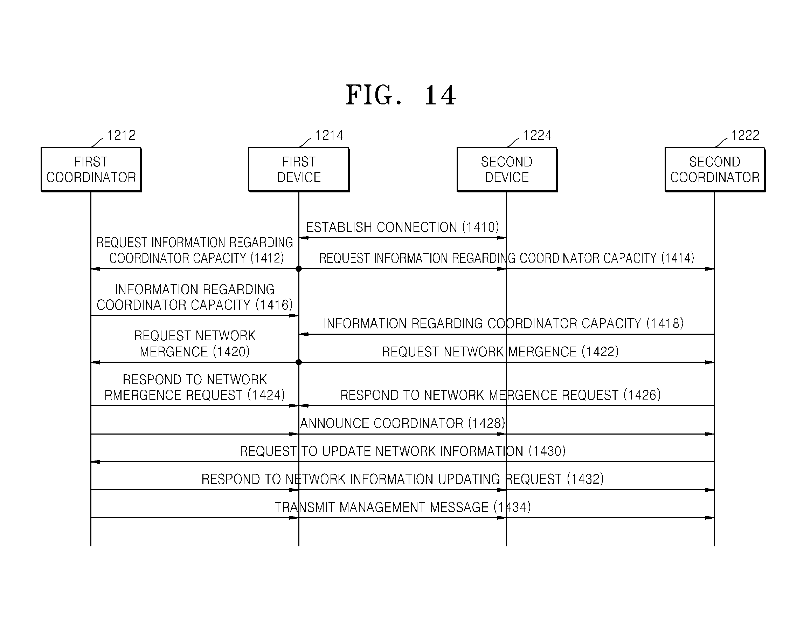

The coordinators 1212 and 1222 respectively exist in the first network 1210 and the second network 1220 prior to the mergence. However, since it is necessary for a single coordinator to manage a merged network after the mergence, either the first coordinator 1212 or the second coordinator 122 shall be elected as the coordinator of the merged network. Therefore, either the first network 1210 or the second network 1220, which is related to the connection 1200 for network mergence, elects one of the two coordinators 1212 and 1222 as the coordinator of the merged network. Detailed description thereof will be given below with reference to FIGS. 13 and 14.

FIG. 13 is a flowchart for describing a method of electing a coordinator according to another embodiment of the present invention.

Referring to FIG. 13, in an operation 1310, a first device 1214 and a second device 1224 establish a connection therebetween. As a step in which the first device 1214 and the second device 1224 establish a physical connection therebetween, a link between the first device 1214 and the second device 1224 may be set up.

After a connection is established, the first device 1214 receives information regarding coordinator capacity of the first coordinator 1212 in an operation 1320 and receives information regarding coordinator capacity of the second coordinator 1222 in an operation 1330. FIG. 13 shows that the first device 1214 elects a coordinator of a merged network, and thus the first device 1214 receives information regarding coordinator capacity required for electing a coordinator from the first coordinator 1212 and the second coordinator 1222 in the operations 1320 and 1330. Alternatively, the second device 1224 may elect a coordinator of the merged network.

Any methods may be used to select a device for electing the first device 1214 or the second device 1224 as a coordinator. However, according to an embodiment of the present invention, a device receiving a message for periodically announcing existence (e.g., a beacon message) first may elect a coordinator. For example, if the second device 1224 transmits a message for announcing existence of the second device 1224 and the first device 1214 receives the message, the first device 1214 may be elected as a device which elects a coordinator of a merged network.

The first device 1214 receives information regarding coordinator capacity of the first coordinator 1212 via a connection in the first network 1210 and receives information regarding coordinator capacity of the second coordinator 1222 via the newly established connection 1200.

In an operation 1340, the first device 1214 elects the first coordinator 1212 or the second coordinator 1222 as a coordinator of the merged network based on the information regarding coordinator capacity of the first coordinator 1212 and the information regarding coordinator capacity of the second coordinator 1222 received in the operations 1320 and 1330.

In an operation 1350, the first device 1214 notifies a result of the election of the operation 1340 to the first coordinator 1212 and the second coordinator 1222. The result of the election may be notified to both the first coordinator 1212 and the second coordinator 1222, or may be notified only to the first coordinator 1212 or the second coordinator 1222, whichever elected as a coordinator of a merged network.

When the result of election of a coordinator is notified in the operation 1350, a management message including network information is transmitted to devices within the merged network in operations 1360 and 1370. The management message is a periodical message as described above and may be a message including information regarding an identifier of a device elected as a coordinator or information indicating that the corresponding device is a coordinator.

FIG. 14 is a flowchart for describing a method of electing a coordinator according to an embodiment of the present invention.

Referring to FIG. 14, the first device 1214 and the second device 1224 establish a connection therebetween in an operation 1410. The operation 1410 corresponds to the operation 1310 of FIG. 13.

In an operation 1412, the first device 1214 requests information regarding coordinator capacity to the first coordinator 1212 and the second coordinator 1222. FIG. 14 shows a method in which the first device 1214 elects a coordinator of a merged network in the similar regard as the method shown in FIG. 13. Therefore, the first device 1214 requests information regarding coordinator capacity to the first coordinator 1212 and the second coordinator 1222. However, as described above, the second device 1224 may also elect a coordinator of a merged network.

In operations 1416 and 1418, the first device 1214 receives information regarding coordinator capacity from the first coordinator 1212 and the second coordinator 1222. In response to the requests in the operations 1412 and 1414, the information regarding coordinator capacity is received.

The first device 1214 elects the first coordinator 1212 and the second coordinator 1222 as a coordinator of a merged network based on the information regarding coordinator capacity in operations 1416 and 1418. When a coordinator of a merged network is elected, the first device 1214 notifies a result of the election to the first coordinator 1212 and the second coordinator 1222 in operations 1420 through 1426.

In the operations 1420 and 1422, the first device 1214 requests network mergence to the first coordinator 1212 and the second coordinator 1222. A message for requesting network mergence includes an identifier of a merged network and an identifier of a coordinator of the merged network. The identifier of the coordinator of the merged network may be an address unique to a device elected as the coordinator. In other words, an address unique to the first coordinator 1212 or the second coordinator 1222, which is a device elected as the coordinator of the merged network, may be included in the message for requesting network mergence transmitted to the first coordinator 1212 and the second coordinator 1222 in the operations 1420 and 1422.

In operations 1424 and 1426, the first coordinator and the second coordinator 1212 and 1222 transmits a response message to the first device 1214 with respect to the message for requesting network mergence. In the operations 1424 and 1426, a response message for announcing reception of the message for requesting network mergence to the first device 1214 and indicating that it is ready to merge networks is transmitted to the first device 1214..

When the first device 1214 elects the first coordinator 1212 as a coordinator of a merged network and notifies a result of the election to the first coordinator 1212 and the second coordinator 1222 in the operations 1420 and 1422, the first coordinator 1212 announces to devices within the merged network that the first coordinator 1212 is elected as the merged network in an operation 1428.

When election and announcement of the coordinator of the merged network are completed, the second coordinator 1222, which was a coordinator of the second network 1220 prior to the mergence, request the first coordinator 1212 to update network information in an operation 1430, and the first coordinator 1212 transmits a response message with respect to the request message of the operation 1430 to devices within the merged network in an operation 1432. Information regarding an identifier of the merged network, information regarding a relationship between identifiers of a plurality of devices and addresses allocated to the plurality of addresses, information regarding types of the plurality of devices, and information regarding an identifier of the coordinator.

In an operation 1434, the first coordinator 1212, as the coordinator of the merged network, transmits a management message including network information to devices within the network. The management message is a periodical message as described above and may include information indicating that the first coordinator 1212 is the coordinator of the merged network.

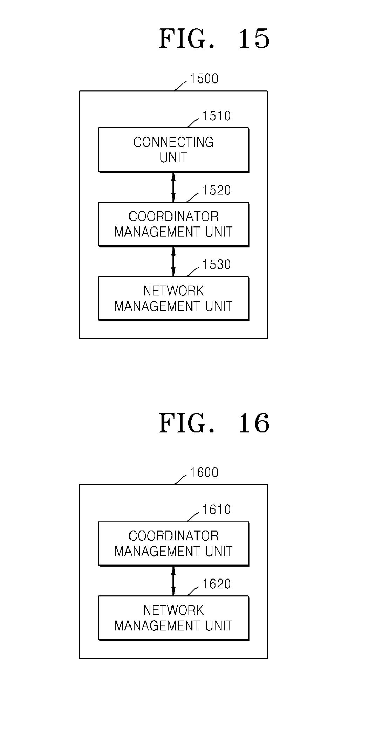

FIG. 15 shows a coordinator electing device 1500 according to an embodiment of the present invention.

Referring to FIG. 15, the coordinator electing device 1500 includes a connecting unit 1510, a coordinator management unit 1520, and a network management unit 1530.

A case where the coordinator electing device 1500 of FIG. 15 is a device included in the first device 410 of FIG. 4, the first device 912 of FIG. 9, or the first device 1214 of FIG. 12 will be described.

The connecting unit 1510 establishes a new connection to another device via a predetermined interface.

In the embodiment shown in FIG. 4, the connecting unit 1510 may also set up a new link to the second device 420.

Furthermore, in the embodiment shown in FIG. 9, the connecting unit 1510 may also set up a new link to the second device 920 which has newly joined the network. However, in a case where the first device 912 and the second device 920 are not directly connected to each other in FIG. 9, another device 914 or 916 directly connected to the second device 920 sets up a new link to the second device 920.

In the embodiment shown in FIG. 12, the connecting unit 1510 may also set up a new link to the second device 1214 included in the second network 1220.

When a new connection is established by the connecting unit 1510, the coordinator management unit 1520 elects a coordinator. The coordinator is elected based on information regarding coordinator capacity.

In the embodiment shown in FIG. 4, the coordinator management unit 1520 receives information regarding coordinator capacity from the second device 420, compares the information regarding coordinator capacity of the first device 410 and the received information regarding coordinator capacity of the second device 420 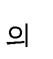 coordinator, and elects the first device 410 or the second device 420 as the coordinator.

In the embodiment shown in FIG. 9, the coordinator management unit 1520 receives information regarding coordinator capacity from the second device 920, compares the information regarding coordinator capacity of the first device 912 and the received information regarding coordinator capacity of the second device 420, and elects the first device 912 or the second device 420 as the coordinator. If the first device 912, which was a coordinator before the second device 420 joins the network, is elected as a coordinator, the first device 912 continuously functions as the coordinator. However, if the second device 920, which has newly joined the network, is elected as a coordinator, the first device 912 hands over coordinator role to the second device 920. A handover requesting message is transmitted to the second device 920, and a response message is received from the second device 920.

In the embodiment shown in FIG. 12, the coordinator management unit 1520 receives information regarding coordinator capacity from the first coordinator 1212 of the first network 1210 and receives information regarding coordinator capacity from the second coordinator 1222 of the second network 1220, to which the second device 1224 has belonged. Next, the coordinator management unit 1520 compares the received information regarding coordinator capacity of the first coordinator 1212 and the received information regarding coordinator capacity of the second coordinator 1222 and elects the first coordinator 1212 or the second coordinator 1222 as the coordinator of the merged network. When the coordinator is elected, a result of the election is notified to at least one of the first coordinator 1212 or the second coordinator 1222.

The network management unit 1530 functions as a coordinator based on the result of election by the coordinator management unit 1520. A management message including network information is transmitted to at least one device within the network.

In the embodiment shown in FIG. 4, the network management unit 1530 notifies the second device 420 that the first device 410 is elected as a coordinator. Furthermore, as the second device 420 transmits an association requesting message, an association response message is transmitted to the second device 420, and thus association is completed. Furthermore, the network management unit 1530 may periodically transmit messages including network information.

In the embodiment shown in FIG. 9, the network management unit 1530 performs the same operation as that in the embodiment of FIG. 4. In other words, association with the second device 920 may be completed and management messages may be periodically transmitted.

However, if the newly joined second device 920 is elected as a coordinator as a result of election by the coordinator management unit 1520, the second device 920 functions as a coordinator. Therefore, network management unit 1530 does not function as the coordinator, receives a message announcing that the second device 920 is a coordinator from the second device 920, and receives management messages periodically transmitted by the second device 920.

In the embodiment shown in FIG. 12, the first device 1214 does not function as a coordinator in the merged network. Therefore, the network management unit 1530 of the first device 1214 receives a message announcing that a corresponding device is the coordinator of the merged network from the first coordinator 1212 or the second coordinator 1222, whichever elected as the coordinator of the merged network, and may periodically receive management messages from the corresponding device.

A case where the coordinator electing device 1500 of FIG. 15 is included in the second device 420 of FIG. 4, the second device 920 of FIG. 9, or the second device 1224 of FIG. 12 will be described below.

In a case where the coordinator electing device 1500 is a device included in the second device 420 of FIG. 4, the connecting unit 1510, coordinator management unit 1520, and the network management unit 1530 perform operations in the reversed manner with respect to operations performed in the case where the connecting unit 1510, coordinator management unit 1520, and the network management unit 1530 are included in the first device 410. In other words, the connecting unit 1510 establishes a connection to the first device 410, the coordinator management unit 1520 receives information regarding coordinator capacity of the first device 410 and elects a coordinator based on the received information regarding coordinator capacity, and the network management unit 1530 functions as the coordinator when the second device 420 is elected as the coordinator.

In the same regard, if the coordinator electing device 1500 is a device included in the second device 920 of FIG. 9, the connecting unit 1510, the coordinator management unit 1520, and the network management unit 1530 perform operations in the reversed manner with respect to operations performed in the case where the connecting unit 1510, coordinator management unit 1520, and the network management unit 1530 are included in the first device 912. The connecting unit 1510 establishes a connection to the first device 912 or another device 914 or 916, and the coordinator management unit 1520 transmits information regarding coordinator capacity of the second device 920 to the first device 912. If the first device 912 is elected as a coordinator as a result of election by the first device 912, the network management unit 1530 receives a message announcing that the first device 912 is a coordinator and a management message from the first device 912. However, if the second device 920 is elected as the coordinator as a result of election by the first device 912, the network management unit 1530 receives a handover requesting message from the first device 912 and transmits a message announcing that the second device is the coordinator to the first device 912.

If the coordinator electing device 1500 is a device included in the second device 1224 of FIG. 12, the connecting unit 1510, the coordinator management unit 1520, and the network management unit 1530 perform operations in the reversed manner with respect to operations performed in the case where the connecting unit 1510, coordinator management unit 1520, and the network management unit 1530 are included in the first device 1214. The connecting unit 1510 establishes a connection to the first device 1214, and the coordinator management unit 1520 transmits information regarding coordinator capacity of the second device 920 to the first device 1214. The coordinator management unit 1520 relays information regarding coordinator capacity of the second coordinator 1222 and transmits the information regarding coordinator capacity of the second coordinator 1222 to the first device 1214, and relays a result of election of a coordinator by the first device 1214 and transmits the result of the election to the second coordinator 1222. Furthermore, the network management unit 1530 receives a message that a corresponding device is a coordinator from the first coordinator 1212 or the second coordinator 1222, whichever elected as the coordinator of a merged network, and receives a management message from the corresponding device.

FIG. 16 shows a coordinator electing device 1600 according to another embodiment of the present invention.

FIG. 16 shows a device, which is included in the first coordinator 1212 or the second coordinator 1222 in the embodiment shown in FIG. 12, transmits information regarding coordinator capacity to the first device 1214, and functions as a coordinator according to a result of election by the first device 1214.

Referring to FIG. 16, the coordinator electing device 1600 includes a a coordinator management unit 1610 and a network management unit 1620.

The coordinator management unit 1610 transmits information regarding coordinator capacity of the first device 1214, which has established the connection 1200 for network mergence. In a case where the coordinator electing device 1600 is included in the first coordinator 1212, information regarding coordinator capacity of the first coordinator 1212 is transmitted to the first device 1214. In a case where the coordinator electing device 1600 is included in the second coordinator 1222, information regarding coordinator capacity of the second coordinator 1222 is transmitted to the first device 1214.

The network management unit 1620 receives a result of election of a coordinator from the first device 1214 and functions as a coordinator based on the result of the election. If the first device 1214 elects the first coordinator 1212 or the second coordinator 1214 as a coordinator of a merged network, the network management unit 1620 functions as a coordinator based on the result of the election. If a device including the network management unit 1620 is not elected as a coordinator, the network management unit 1620 receives a message announcing that a particular device is a coordinator from a device elected as the coordinator and receives a management message including network information.

According to the present invention, a coordinator which conducts network management may be dynamically elected, and thus a coordinator may freely join or leave a network. Furthermore, an optimal coordinator may be elected based on information regarding coordinator capacity, and thus network management may be conducted quickly and stably.

While this invention has been particularly shown and described with reference to preferred embodiments thereof, it will be understood by those skilled in the art that various changes in form and details may be made therein without departing from the spirit and scope of the invention as defined by the appended claims. The preferred embodiments should be considered in descriptive sense only and not for purposes of limitation. Therefore, the scope of the invention is defined not by the detailed description of the invention but by the appended claims, and all differences within the scope will be construed as being included in the present invention. The invention can also be embodied as computer readable codes on a computer readable recording medium

For example, a coordinator electing device according to an exemplified embodiment of the present invention may include a bus coupled with each of units of the devices as shown in FIGS. 15 and 16 and at least one processor associated with the bus. Furthermore, the coordinator electing device may include a memory, which is associated with the bus to store a command, a received message, or a generated message and is coupled with at least one processor for performing the commands as described above.

Examples of the computer readable recording medium include read-only memory (ROM), random-access memory (RAM), CD-ROMs, magnetic tapes, floppy disks, optical data storage devices, etc. The computer readable recording medium can also be distributed over network coupled computer systems so that the computer readable code is stored and executed in a distributed fashion.

## Claims

1. A method by which a first device elects a coordinator for managing a network, the method comprising:
establishing a connection to a second device;
receiving information regarding coordinator capacity of the second device from the second device; and
electing the first device or the second device as the coordinator by comparing information regarding coordinator capacity of the first device and the information regarding coordinator capacity of the second device,
wherein the information regarding coordinator capacity comprises information regarding at least one item for determining whether a corresponding device is suitable as a coordinator.

2. The method of claim 1, wherein the at least one item comprises an item indicating whether the corresponding device is a device capable of functioning as a coordinator.

3. The method of claim 2, wherein the at least one item further comprises:
an item indicating whether the corresponding device is a switch device for relaying data transmission between devices within the network; and
an item indicating whether the corresponding device is a device always ON.

4. The method of claim 3, wherein the at least one item further comprises:
an item related to a number of ports included in the corresponding device; and
an item related to the maximum hop of the corresponding device with respect to another device connected to the corresponding device.

5. The method of claim 1, wherein, in the step of electing the first device or the second device as the coordinator, if it is determined that the second device is more suitable as the coordinator than the first device as a result of comparing the information regarding coordinator capacity of the first device and the information regarding coordinator capacity of the second device, the second device is elected as the coordinator.

6. The method of claim 5, further comprising, if the first device is a coordinator of a network, to which the first device has belonged before the first device is connected to the second device, handing over coordinator role to the second device.

7. The method of claim 1, wherein, in the step of electing the first device or the second device as the coordinator, if it is determined that the first device is more suitable as the coordinator than the second device as a result of comparing the information regarding coordinator capacity of the first device and the information regarding coordinator capacity of the second device, the first device is elected as the coordinator.

8. The method of claim 7, further comprising announcing the devices within the network that the first device is the coordinator.

9. A method by which a first device elects a coordinator for managing a network, the method comprising:
establishing a connection to a second device;
receiving information regarding coordinator capacity from a first coordinator of a first network, to which the first device has belonged prior to the connection;
receiving information regarding coordinator capacity from a second coordinator of a second network, to which the second device has belonged prior to the connection; and
electing the first coordinator or the second coordinator as the coordinator of a network, which is formed as the first network and the second network are merged, by comparing information regarding coordinator capacity of the first coordinator and the information regarding coordinator capacity of the second coordinator,
wherein the information regarding coordinator capacity comprises information regarding at least one item for determining whether a corresponding device is suitable as a coordinator.

10. The method of claim 9, wherein the at least one item comprises an item indicating whether the corresponding device is a device capable of functioning as a coordinator.

11. The method of claim 10, wherein the at least one item further comprises:
an item indicating whether the corresponding device is a switch device for relaying data transmission between devices within the network; and
an item indicating whether the corresponding device is a device always ON.

12. The method of claim 11, wherein the at least one item further comprises:
an item related to a number of ports included in the corresponding device; and
an item related to the maximum hop of the corresponding device with respect to another device connected to the corresponding device.

13. A coordinator electing device for electing a coordinator, which manages a network, the coordinator electing device comprising:
a connecting unit, which establishes a connection to a second device; and
a coordinator management unit, which receives information regarding coordinator capacity of the second device from the second device and elects the first device or the second device as the coordinator by comparing information regarding coordinator capacity of the first device and the information regarding coordinator capacity of the second device,
wherein the information regarding coordinator capacity comprises information regarding at least one item for determining whether a corresponding device is suitable as a coordinator.

14. A coordinator electing device for electing a coordinator, which manages a network, the coordinator electing device comprising:
a connecting unit, which establishes a connection to a second device; and
a coordinator management unit, which receives information regarding coordinator capacity from a first coordinator of a first network, to which the first device has belonged prior to the connection, receives information regarding coordinator capacity from a second coordinator of a second network, to which the second device has belonged prior to the connection, and elects the first coordinator or the second coordinator as the coordinator of a network, which is formed as the first network and the second network are merged, by comparing information regarding coordinator capacity of the first coordinator and the information regarding coordinator capacity of the second coordinator,
wherein the information regarding coordinator capacity comprises information regarding at least one item for determining whether a corresponding device is suitable as a coordinator.

15. A computer readable recording medium having recorded thereon a computer program for implementing the method of claim 1.
